# EUROPEAN PATENT SPECIFICATION

(11) **EP 2 025 643 B1**
(45) Date of publication and mention of the grant of the patent: **07.03.2018**
(21) Application number: 07742300.2
(22) Date of filing: 24.04.2007
(51) Int. Cl.: C01B 32/05, B82Y 40/00, C01B 32/162, D01F 9/127, D01F 9/133, B82Y 30/00

(54) **Method for producing single-walled carbon nanotubes**
Verfahren zur Herstellung von einwandigen Kohlenstoff-Nanoröhrchen
Méthode de préparation de nanotubes de carbone monoparoi

(30) Priority: 24.04.2006 JP 2006119774
(43) Date of publication of application: 18.02.2009
(73) Proprietor: National Institute of Advanced Industrial Science and Technology, Tokyo 100-8921 (JP)
(72) Inventor: SAITO, Takeshi, Tsukuba-shi, Ibaraki 305-8565 (JP); OHSHIMA, Satoshi, Abiko-shi, Chiba 270-1165 (JP); YUMURA, Motoo, Tsukuba-shi, Ibaraki 305-8565 (JP)
(74) Representative: Calamita, Roberto
(86) International application number: PCT/JP2007/058865
(87) International publication number: WO 2007/125923

(56) References cited:
- WO-A1-03/072859
- JP-A- 10 120 409
- JP-A- 2000 095 509
- LIAN ET AL: "Spectroscopic study on the centrifugal fractionation of soluble single-walled carbon nanotubes", CARBON, ELSEVIER, OXFORD, GB, vol. 43, no. 13, 1 November 2005 (2005-11-01), pages 2750-2759, XP005004225, ISSN: 0008-6223, DOI: 10.1016/J.CARBON.2005.05.037
- SAITO T ET AL: "Size control of metal nanoparticle catalysts for the gas-phase synthesis of single-walled carbon nanotubes", JOURNAL OF PHYSICAL CHEMISTRY. B (ONLINE), AMERICAN CHEMICAL SOCIETY, COLUMBUS, OH, US, vol. 109, no. 21, 1 January 2005 (2005-01-01), pages 10647-10652, XP003016998, ISSN: 1520-5207, DOI: 10.1021/JP044200Z
- T. SAITO, W.-C. XU, S. OHSHIMA, H. AGO, M. YUMURA, S. IIJIMA: "Supramolecular Catalysts for the Gas-Phase Synthesis of Single-walled Carbon Nanotubes", J. PHYS. CHEM. B, vol. 110, 7 March 2006 (2006-03-07), pages 5849-5853, XP002681000,
- SAITO T. ET AL.: 'Size control of metal nanoparticle catalysts for the gas-phase synthesis of single-walled carbon nanotubes' JOURNAL OF PHYSICAL CHEMISTRY B vol. 109, no. 21, 2005, pages 10647 - 10652, XP003016998
- YONGFU LIAN ET AL.: 'Spectroscopic study on the centrifungal fractionation of soluble single-walled carbon nanotubes' CARBON vol. 43, no. 13, 2005, pages 2750 - 2759, XP005004225
- TAKESHI SAITO ET AL.: 'Synthesis and Diameter-Control of Single-Walled Carbon Nanotubes by the Direct-Injection-Pyrolytic-Synthesis (DIPS) Method' THE INSTITUTE OF ELECTRICAL ENGINEERS OF JAPAN MAGNETICS KENKYUKAI SHIRYO vol. EFM-05, no. 14-21, 2005, pages 5 - 10, XP003016999
- SAITO T. ET AL.: 'Tanso Carbon Nano Tube no Sentakuteki Chokkei Seigyo Gosei' BUNSHI KOGO SOGO TORONKAI KOEN YOSHISHU (CD-ROM) 2005, page 2B17, XP003017000
- DILLON A.C. ET AL.: 'Systematic inclusion of defects in pure carbon single-wall nanotubes and their effect on the Raman D-band' CHEMICAL PHYSICS LETTERS vol. 401, no. 4-6, 2005, pages 522 - 528, XP004696554

## Description

### Technical Field

The present invention relates to a method for producing a single-walled carbon nanotube. More particularly, it relates to a method for producing a carbon fiber aggregate containing a single-walled carbon nanotube having a specific controlled diameter from a carbon-containing source by a gas-phase flow CVD method in large amount and inexpensively.

### Background Art

Roughly classifying, three kinds of methods of an arc discharge method (see Patent Document 1), a laser vaporization method (see Non-Patent Document 1) and a chemical vapor deposition method (CVD method) (see Patent Document 2) are known as a method for synthesizing a single-walled carbon nanotubes.

Of those, the CVD method is an effective method for synthesizing in large amount and inexpensively. Roughly classifying the CVD method, there are a substrate CVD method of producing by growing from a catalyst supported on substrates or support materials, and a so-called gas-phase flow method (see Patent Document 2) of synthesizing a single-walled carbon nanotube by atomizing a carbon-containing starting material containing a precursor of a catalyst or a catalyst having extremely small particle diameter, and introducing into an electric furnace of high temperature. Of those, particularly the gas-phase flow CVD method has many advantages in the point of cost that substrates or support materials are not used, and scale-up is easy, and is considered to be one of methods most suitable for synthesis in large amount.

According to the substrate CVD method, it is possible to control a diameter of a single-walled carbon nanotube to from more than 2 nm to about 3 nm by controlling a diameter of catalyst metal ultrafine particles (see Non-Patent 2). However, it is difficult to precisely control a diameter in a range of less than this from the point of preparation of metal ultrafine particles which become a catalyst.

Furthermore, it is known that ultrafine single-walled carbon nanotubes having a diameter less than 1.0 nm are obtained by adjusting a catalyst metal or an ambient temperature in a laser vaporization method (see Patent Document 3).

In a single-walled carbon nanotube or a carbon fiber aggregate containing this, it is considered that one having its diameter in a range of from about 1 to 2 nm and excellent purity and uniformity is effective from the practical standpoints such as mechanical characteristics, semiconducting characteristics or optical characteristics. A single-walled carbon nanotube having a diameter range provided with such uniformity and high purity could not be obtained by the conventional methods.

Thus, a single-walled carbon nanotube having high purity and uniform diameter useful as an industrial material involves high cost from the difficulty in production standpoint, and is almost not used in high-strength carbon wire rod which is one of the main uses as a carbon fiber. A carbon wire rod using a multi-walled carbon nanotube which is inexpensive as compared with a single-walled carbon nanotube has been forced to be investigated (see Non-Patent Document 3).

However, the multi-walled carbon nanotube has a large diameter of 5 nm or more and is heterogeneous. Therefore, strength of a wire rod obtained is merely about 460 MPa, and such a wire rod could not be put into practical use.

Patent Document 4 discloses a process for producing single-walled carbon nanotubes using a CVD method with hexane as the carbon source.
Patent Document 1: JP-A-7-197325
Patent Document 2: JP-A-2001-80913
Patent Document 3: JP-A-10-273308
Patent Document 4: WO 03/072859 A1

Non-Patent Document 1: Science, vol. 273, published 1996, p483
Non-Patent Document 2: Journal of Physical Chemistry B, vol. 106, 2002 (published February 16, 2002), p2429
Non-Patent Document 3: 2006 American Physical Society, March Meeting, Preprint, N32.00001 (published March 13, 2006)

### Disclosure of the Invention

### Problems that the Invention is to Solve

The present invention has objects to provide a method to produce a single-walled carbon nanotube having high purity and a controlled diameter, useful as industrial materials including high-strength carbon wire rods, particularly a uniform single-walled carbon nanotube having a diameter in a range of from 1.0 to 2.0 nm, and a method for producing the same efficiently, in large amount and inexpensively.

### Means for Solving the Problems

As a result of earnest studies to solve the above problems, the present inventors have found that a single-walled carbon nanotube having high purity and a controlled diameter is obtained when utilizing a gas-phase flow CVD method in combination with specific hydrocarbons as first and second carbon sources, and have reached to complete the present invention.

That is, according to this application, the following inventions are provided.
1) A method for producing a single-walled carbon nanotube, which comprises:
   synthesizing a single-walled carbon nanotube by a gas-phase flow CVD method using at least a first carbon source and a second carbon source, wherein the first carbon source comprises a saturated aliphatic hydrocarbon which is liquid at ordinary temperature, and the second carbon source comprises an unsaturated aliphatic hydrocarbon which is a gas at ordinary temperature, wherein the saturated aliphatic hydrocarbon which is liquid at ordinary temperature is at least one selected from the group consisting of a non-cyclic saturated aliphatic hydrocarbon represented by the formula CₙH₂ₙ₊₂(n = 6 to 17) and a cyclic aliphatic hydrocarbon selected from the group consisting of cyclohexane, decalin and
   tetradecahydrophenanthrene, and wherein the unsaturated aliphatic hydrocarbon which is a gas at ordinary temperature is selected from the group consisting of ethylene, propylene and acetylene.

The produced single-walled carbon nanotube may have a diameter in a range of from 1.0 to 2.0 nm and an intensity ratio IG/ID between G-band and D-band in a Raman spectrum is 200 or more.

A carbon fiber aggregate may be produced in which the content of the single-walled carbon nanotube described in (1) is 90 at. % or more of the whole.

The cyclic saturated aliphatic hydrocarbon is preferably decalin (decahydronaphthalene).

In the method of the invention, the second carbon source is preferably ethylene or acetylene.

The fiber aggregate may contain single-walled carbon nanotubes having diameter in a range of from 1.0 to 2.0 nm obtained by the production method of the invention. Said carbon fiber aggregate may have a ribbon shape or a sheet shape. A high-strength carbon wire rod may be obtained by spinning the carbon fiber aggregate.

### Advantage of the Invention

The single-walled carbon nanotube prepared by the method according to the present invention has a diameter in a range of from 1.0 to 2.0 nm, an intensity ratio IG/ID between G-band and D-band in a Raman spectrum of 200 or more, and extremely high purity and high quality. Therefore, semiconducting, mechanical and optical characteristics become homogeneous.

Therefore, for example, a wire rod obtained by spinning the uniform single-walled carbon nanotube has the structure that single-walled carbon nanotubes are densely packed in the inside of the wire rod, and are strongly bonded by a van der Waals' force, respectively. As a result, this gives a wire rod having very high strength as compared with a wire rod obtained by spinning single-walled carbon nanotubes having heterogeneous diameter distribution or carbon nanotubes having a large diameter. This fact brings about great industrial contribution in, for example, electronics field or high-strength carbon material field.

Furthermore, according to the method for producing a single-walled carbon nanotube or a carbon fiber aggregate containing the same, a single-walled carbon nanotube having a controlled diameter, particularly a high purity single-walled carbon nanotube having a diameter in a range of from 1.0 to 2.0 nm, and a carbon fiber aggregate containing the same can be produced efficiently, in large amount and inexpensively.

### Brief Description of the Drawings

Fig. 1 is an explanatory view of a representative vertical single-walled carbon nanotube production apparatus used in the production method of the present invention.
Fig. 2 is a measurement graph of optical absorption spectra of Samples 1 to 7.
Fig. 3 is a transmission electron micrograph of Sample 4.
Fig. 4 is a measurement graph of resonant Raman spectra of Samples 1 to 7 with values of the intensity ratio between G-band and D-band.
Fig. 5 is a scanning electron micrograph of a surface of a ribbon-like cut sample of a two-dimensional sheet of Sample 4.
Fig. 6 is a scanning electron micrograph of a surface of the carbon wire rod obtained in Example 9.
Fig. 7 is a graph of a tensile strength test of the carbon wire rod obtained in Example 9.

Description of Reference Numerals and Signs
- 1: Electric furnace
- 2: Reaction tube
- 3: Spray nozzle
- 4: Mass flow controller of first carrier gas
- 5: Mass flow controller of second carrier gas
- 6: Microfeeder
- 7: Recovery filter
- 8: Mass flow controller of second carbon source
- 9: Gas mixer column

### Best Mode for Carrying Out the Invention

The method for producing single-walled carbon nanotubes or carbon fiber aggregates containing the same from a carbon-containing source by a gas-phase flow CVD method of the present invention is characterized in that at least two carbon-containing sources are provided, a saturated aliphatic hydrocarbon which is liquid at ordinary temperature is used as a first carbon source, and an unsaturated aliphatic hydrocarbon is used as a second carbon source.

The "gas-phase flow CVD method" used herein is defined "a method of synthesizing single-walled carbon nanotubes in a flowing gas phase by atomizing a carbon-containing raw material containing a catalyst (including its precursor) and a reaction promoter by a spray or the like, and introducing into a high temperature heating furnace (electric furnace or the like).

Furthermore, the carbon source generally means "an organic compound containing a carbon atom".

In the present invention, a hydrocarbon as the first carbon source is a saturated aliphatic hydrocarbon which is liquid at ordinary temperature, and this saturated aliphatic hydrocarbon is at least one selected from the group consisting of a non-cyclic saturated aliphatic hydrocarbon represented by the formula CₙH₂ₙ₊₂(n = 6 to 17) and a cyclic aliphatic hydrocarbon selected from the group consisting of cyclohexane, decalin and tetradecahydrophenanthrene. The non-cyclic saturated aliphatic hydrocarbon which is liquid at ordinary temperature includes an alkane compound represented by the general formula CₙH₂ₙ₊₂. Examples of the alkane compound include hexane, heptane, octane, nonane, decane, undecane, dodecane, tridecane, tetradecane, pentadecane, hexadecane and heptadecane. The first carbon source preferably used in the present invention is n-heptadecane. The cyclic saturated aliphatic hydrocarbon is selected from the group consisting of cyclohexane, decalin and tetradecahydrophenanthrene. The first carbon source used in the present invention is required to satisfy the condition of liquid at ordinary temperature. Examples of the cyclic saturated aliphatic hydrocarbon include cyclohexane, decalin (including cis-decalin, trans-decalin and a mixture thereof), and tetradecahydrophenanthrene. The first carbon source preferably used in the present invention is decalin.

In the present invention, the hydrocarbon which becomes the second carbon source is an unsaturated aliphatic hydrocarbon selected from the group consisting of ethylene, propylene and acetylene. As the unsaturated aliphatic hydrocarbon, it is preferred to use one which thermally decomposes at a temperature lower than the saturated aliphatic hydrocarbon used in the first carbon source.

Examples of the unsaturated aliphatic hydrocarbon include ethylene and propylene, having a double bond, and acetylene having a triple bond. The second carbon source preferably used in the present invention is ethylene or acetylene, and ethylene is more preferred.

In the present invention, the first carbon source and the second carbon source are appropriately combined as the carbon source. From the points of decomposition temperature and reaction controllability of the first carbon source and the second carbon source, when decalin is used as the first carbon source, it is preferred to use ethylene, acetylene or the like having a thermal decomposition temperature lower than decalin, as the second carbon source.

Use proportion of the first carbon source and the second carbon source is determined by diameter of target single-walled carbon nanotubes. When indicated as a ratio of volume between the first carbon source and the second carbon source, (volume of second carbon source)/(volume of first carbon source), at room temperature, the ratio is 1.0×10⁰ to 1.0×10⁵, preferably 1.5×10¹ to 6.3×10⁴, and more preferably 1.0×10² to 1.0×10⁴.

From the standpoint of efficient preparation of single-walled carbon nanotubes, the ratio, (volume of second carbon source)/(volume of first carbon source), is preferably 1.0×10⁵ or less, and from the standpoints of flow rate control of the second carbon source and conducting a uniform reaction, the ratio is preferably 1.0×10⁰ or more.

Furthermore, from the point of side reaction control, a method of introducing the first carbon source and the second carbon source into a reactor is that the second carbon source should not be introduced before introducing the first carbon source, and preferably the first carbon source and the second carbon source are simultaneously introduced into a reactor.

The flow rate in this case is not particularly limited, and is appropriately selected according a volume and a shape of a reactor, flow rate of a carrier gas, and the like.

Furthermore, the first carbon source and the second carbon source are preferably introduced into a reactor together with a carrier gas in order to conduct a reaction quickly and uniformly.

As the carrier gas, the conventionally known hydrogen or an inert gas containing hydrogen is preferably used.

Use proportion of the carrier gas and the first carbon source is that a ratio of volume between the first carbon source and the carrier gas, (volume of first carbon source)/(volume of carrier gas), at room temperature is from 5.0×10⁻⁸ to 1.0×10⁻⁴, and preferably from 1.0×10⁻⁷ to 1.0×10⁻⁵.

To produce single-walled carbon nanotubes or carbon fiber aggregates containing the same by the present invention, for example, the respective catalyst, reaction promoter, first carbon source, second carbon source and preferably a carrier gas, or a raw material mixture obtained by mixing those are supplied to a reaction region maintained at a temperature of from 800 to 1,200°C in the reactor.

The catalyst used in the present invention is not particularly limited in the kind and form of a metal, but a transition metal compound or transition metal ultrafine particles are preferably used.

The transition metal compound can form transition metal fine particles as a catalyst by decomposing in the reactor, and is preferably supplied to a reaction region maintained at a temperature of from 800 to 1,200°C in the reactor in the state of a gas or a metal cluster.

Examples of the transition metal atom include iron, cobalt, nickel, scandium, titanium, vanadium, chromium and manganese. Above all, iron, cobalt and nickel are more preferred.

Examples of the transition metal compound include an organic transition metal compound and an inorganic transition metal compound. Examples of the organic transition metal compound include ferrocene, cobaltocene, nickelocene, iron carbonyl, iron acetylacetonate and iron oleate. Ferrocene is more preferred. The inorganic transition metal compound includes an iron chloride.

A sulfur compound is preferably used as the reaction promoter according to the present invention. The sulfur compound contains sulfur atoms and interacts with transition metal catalyst particles, thereby promoting formation of single-walled carbon nanotubes.

Examples of the sulfur compound include an organic sulfur compound and an inorganic sulfur compound. Examples of the organic sulfur compound include sulfur-containing heterocyclic compounds such as thianaphthene, benzothiophene and thiophene. Thiophene is more preferred. The inorganic sulfur compound includes hydrogen sulfide.

The single-walled carbon nanotube according to the present invention is characterized in that its diameter is fallen in a range of from 1.0 to 2.0 nm, and an intensity ratio IG/ID between G-band and D-ban in a Raman spectrum is 200 or more.

The G-band in a Raman spectrum is considered to be a vibration mode observed in the vicinity of 1,590 cm⁻¹ and be the same kind of a vibration mode as a Raman active mode of graphite. On the other hand, the D-band is a vibration mode observed in the vicinity of 1,350 cm⁻¹. The graphite has a huge phonon density of state in this frequency region, but is not Raman active. Therefore, it is not observed in graphite having high crystallizability such as HOPG (highly-oriented pyrolytic graphite). However, where defect is introduced, momentum conservation law is broken, and it is observed as a Raman peak. For this reason, the peak of this type is considered as a peak derived from defect. Because of defect derivation, it is known that the peak is observed with high intensity in amorphous or nano-particles having low crystallizability. Therefore, the intensity ratio IG/ID of peaks derived from those G-band and D-band has high objectivity as a measure of structure and purity of a single-walled carbon nanotube, and is said to be one of the most reliable purity evaluation methods. It is considered to be high purity and high quality with the increase of the IG/ID value.

As described in the item of Background Art of the present invention, it is considered that single-walled carbon nanotubes having diameter fallen in a range of from about 1 to 2 nm and having excellent purity and uniformity is effective. In the conventional methods, single-walled carbon nanotubes having a diameter range equipped with such uniformity and high purity could not be obtained.

For example, according to a substrate CVD method, it is possible to control the diameter of single-walled carbon nanotubes to from more than 2 nm to about 3 nm by controlling diameter of catalyst metal ultrafine particles. However, it is difficult to precisely control the diameter to be smaller than this from the point of preparation of metal ultrafine particles which become catalysts. Furthermore, single-walled carbon nanotubes having several kinds of diameters can be obtained by adjusting catalyst metal or reaction temperature in a laser vaporization method. However, the diameter obtained has been limited to extremely certain ranges.

Furthermore, in any one of the methods, the intensity ratio IG/ID between G-band and D-band in a Raman spectrum is at most about 100, and structural defect and impurities are included in certain single-walled carbon nanotubes. Thus, it has not been said to be high quality.

Contrary to this, differing from the conventional ones, the single-walled carbon nanotube according to the present invention has the diameter fallen in a range of from about 1 to 2 nm and the IG/ID of at least 200, and more preferably 300 or more. Therefore, electric, mechanical and optical characteristics are homogeneous as compared with the conventional ones.

In particular, the carbon fiber aggregate occupying its content of 90 % or more to the whole has the structure that the single-walled carbon nanotubes are densely packed in the inside of a carbon fiber aggregate wire rod, and strongly bonded by van der Waals' force, respectively, thereby giving a wire rod having very high strength as compared with single-walled carbon nanotubes having heterogeneous diameter distribution and a carbon nanotube having a large diameter. This brings about great industrial contribution in electronics field, high-strength carbon material field, and the like.

The carbon fiber aggregate can be processed into a form such as a ribbon shape, a sheet shape or a sponge shape. Furthermore, in the carbon fiber aggregate processed into the ribbon-shaped form, orientation of the single-walled carbon nanotube is random in a two-dimensional plane of a ribbon. By twisting this ribbon to thereby spin a carbon wire rod, the single-walled carbon nanotube is oriented in a twisted direction of the wire rod in the course of spinning, thereby a pseudo one-dimensional structure can be produced.

The carbon wire rod constituted of the one-dimensionally oriented single-walled carbon nanotube has a uniform diameter, and as a result, has the structure that the single-walled carbon nanotubes are densely packed in the inside of the wire rod, and strongly bonded by van der Waals' force, respectively. Therefore, it is possible to produce a wire rod having very high strength as compared with a wire rod obtained by spinning a single-walled carbon nanotube having heterogeneous diameter distribution or a carbon nanotube having a large diameter.

### Examples

The present invention is described more specifically below based on the Examples. The following Examples are to facilitate understanding the present invention, and the invention is not limited to those Examples. In other words, changes, embodiments and other examples based on the technical concept of the present invention are included in the present invention.

### Example 1

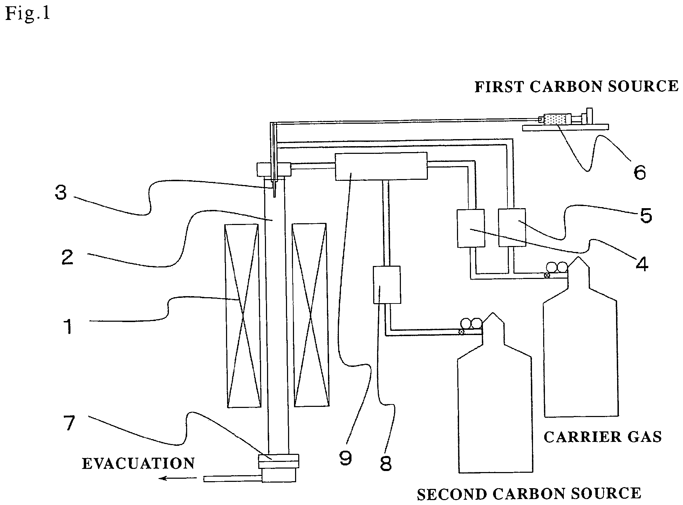

A single-walled carbon nanotube of the present invention was produced using a vertical single-walled carbon nanotube production apparatus as shown in Fig. 1.

The apparatus is constituted of a 4 kW electric furnace 1, a mullite reaction tube 2 having an inner diameter of 5.0 cm and an outer diameter of 5.5 cm, a spray nozzle 3, a mass flow controller of first carrier gas 4, a mass flow controller of second carrier gas 5, a microfeeder 6, a recovery filter 7, a mass flow controller of second carbon source 8 and a gas mixer column 9.

A raw material liquid having a mixing ratio of decalin as a first carbon source : ferrocene as an organic transition metal compound : thiophene as an organic sulfur compound of 100:4:2 in weight ratio was stored in the microfeeder 6. On the other hand, ethylene was used as a second carbon source, and its flow rate was controlled through the second carbon flow meter 8 and the gas mixer 9.

Using hydrogen having a flow rate of 7 liters/min as a carrier gas, the above raw material liquid was sprayed in the reaction tube 2 in an electric furnace heated to 1,200°C, in a flow rate of 3.2 µl/min for 3 hours, thereby conducting a gas-phase flow CVD synthesis. The product was collected by the recovery filter 7. The product produced by controlling the second carbon source flow rate to 0.5 sccm was used as Sample 1. Yield of Sample 1 was 18.5 mg.

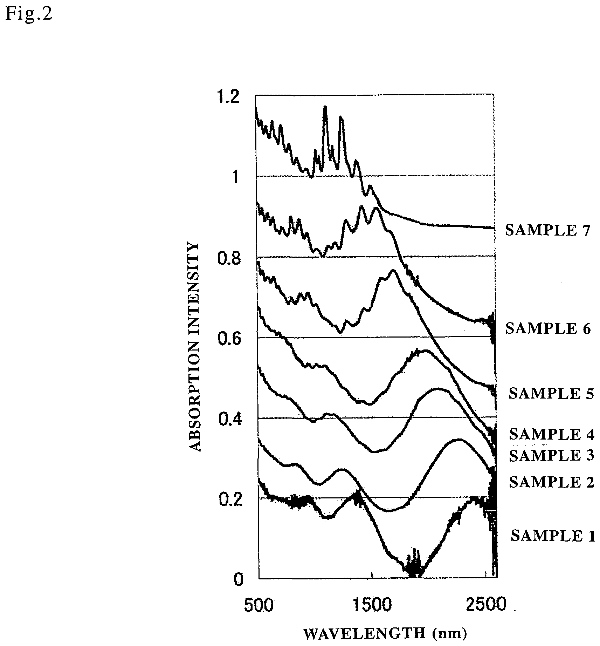

To evaluate a diameter of Sample 1 produced in Example 1, measurement of optical absorption spectrum (UV3150, manufactured by Shimadzu Corporation) was carried out. It is known that only in the case of a sample having a controlled diameter, S1, S2 and M1 peaks are precisely observed in a optical absorption spectrum. Furthermore, as described in Synthetic Metals, vol. 103, 1999, p.2555, in a optical absorption spectrum of single-walled carbon nanotubes, band gap E₁₁^{s} of a nanotube is recognized by a peak position of S1 observed, and the E₁₁^{s} (eV) and the diameter d (nm) has the relationship of E₁₁^{s} ≅ 1/d. From those, a diameter of a single-walled carbon nanotube can be estimated. A method for preparing a sample for optical absorption spectrum has used the method described in Applied Physics Letters, vol. 88, 2006, p.093123-1. In Sample 1, S1 peak was clearly observed at 2,420 nm as shown in Fig. 2, and from this fact, it was understood that a single-walled carbon nanotube having a controlled diameter was synthesized.

S1 peak at 2,420 nm observed corresponds to band gap E₁₁^{s} ≅ 0.51 eV, and it is estimated from the above equation that the diameter of the single-walled carbon nanotube is about 2.0 nm. That is, a carbon fiber aggregate comprising a single-walled carbon nanotube satisfying the upper limit in the condition of the present invention that the diameter is from 1.0 to 2.0 nm, and having excellent controlled diameter distribution could be obtained by this Example 1.

### Example 2

Experiment was conducted in the same manner as in Example 1 except that the second carbon source flow rate was changed to 5.0 sccm and the reaction time was changed to 1 hour. The product thus obtained is used as Sample 2.

The yield was 19.5 mg. As a result of estimating a diameter distribution of a single-walled carbon nanotube in the same manner as in Example 1, peak at 2,285 nm was observed as shown in Fig. 2. This corresponds to that a diameter is 1.9 nm.

### Example 3

Experiment was conducted in the same manners as in Examples 1 and 2 except that the second carbon source flow rate was changed to 10.0 sccm. The product thus obtained is used as Sample 3.

The yield was 20.4 mg. As a result of estimating a diameter distribution of a single-walled carbon nanotube in the same manner as in Example 1, peak at 2,120 nm was observed as shown in Fig. 2. This corresponds to that a diameter is 1.7 nm.

It is seen from the results of Examples 2 and 3 that the diameter of the single-walled carbon nanotubes produced is 0.1 to 0.2 nm smaller than that of Example 1. This means that the diameter of a single-walled carbon nanotube can precisely be controlled with about 0.1 nm increments by appropriately controlling the second carbon source flow rate.

### Example 4

Experiment was conducted in the same manner as in Example 3 except that the raw material liquid flow rate was changed to 5.0 µl/min and the reaction time was changed to 5 hours. The product thus obtained is used as Sample 4.

The yield of Sample 4 was 123.0 mg, and Sample 4 was obtained as a two-dimensional sheet-like carbon fiber aggregate. As a result of estimating a diameter distribution of a single-walled carbon nanotube in the same manner as in Example 1, peak at 2,000 nm was observed as shown in Fig. 2. This corresponds to that a diameter is 1.6 nm.

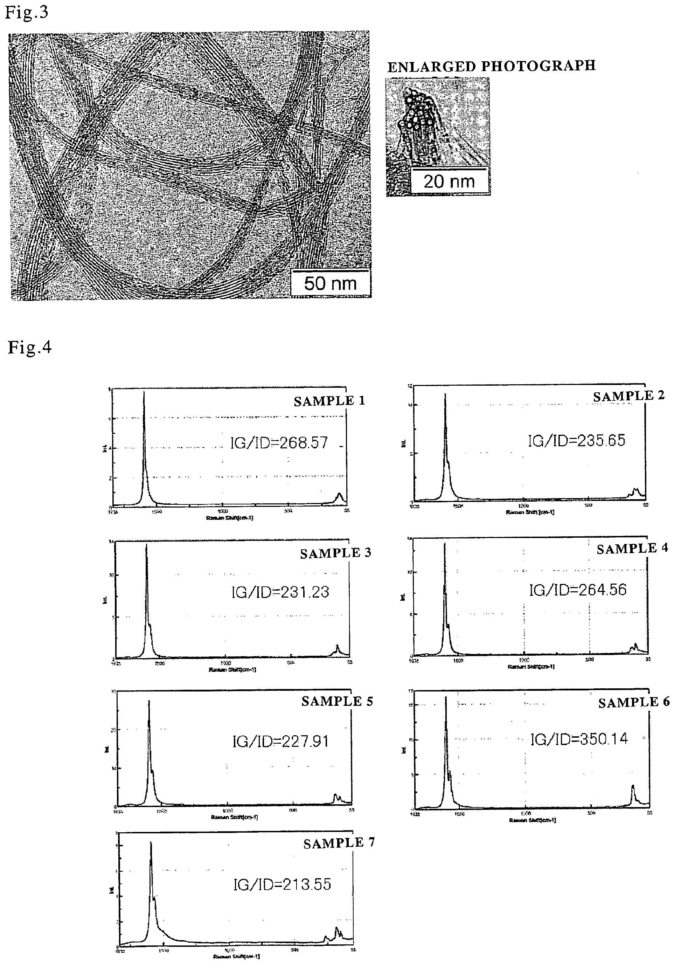

Sample 4 was observed with a transmission electron microscope (JEM1010, manufactured by JEOL Ltd.). The transmission electron microgram is shown in Fig. 3. It can be confirmed by this that a single-walled carbon nanotube is formed. Furthermore, it can be confirmed that an average diameter of the single-walled carbon nanotubes is 1.6 nm, and appropriateness of diameter evaluation by a photoabsorption spectrum was obtained.

### Example 5

Three experiments were conducted in the same manner as in Example 4 except that the second carbon source flow rates were changed to 15.0, 20.0 and 50.0 sccm, respectively, and the reaction time was changed to 4 hours. The products thus obtained were used as Samples 5, 6 and 7, respectively.

As a result of estimating diameter distributions of single-walled carbon nanotubes of Samples 5, 6 and 7 in the same manner as in Example 1, peaks originated from S1 in the vicinity of 1,700 nm, 1,500 nm and 1,200 nm were observed respectively as shown in Fig. 2. This corresponds to that diameters are about 1.4 nm, 1.2 nm and 1.0 nm. That is, by Example 5, Sample 7 is satisfied with the lower limit in the conditions of the present invention that the diameter is from 1.0 to 2.0 nm.

### Example 6

Resonance Raman spectra of Samples 1 to 7 synthesized as above were measured (NRS-2100, manufactured by JASCO Corporation, using argon laser 514.5 nm excitation light). Raman spectra and IG/ID of the respective Samples are shown in Fig. 4. From the fact that IG/ID is 200 or more in all Samples, the conditions of the present invention are satisfied. In particular, from the fact that there is a sample having a value of 350 or more, it was shown that high purity and high quality single-walled carbon nanotube could be synthesized by using the technology of the present invention.

### Example 7

Experiment was conducted in the same manner as in Example 4 except that cyclohexane, n-hexane, n-decane, n-heptadecane, kerosence or LGO (light gas oil) was used in place of decalin which is the first carbon source and is an organic solvent in the catalyst raw material liquid, used in Example 4. As a result, a carbon fiber aggregate was obtained in a yield to the same extent as in Example 4, and it was confirmed to be a single-walled carbon nanotube by a transmission electron microscope. As a result of estimating diameter distributions of single-walled carbon nanotubes of those Samples in the same manner as in Example 1, S1 peaks of absorption spectrum were observed at 2,000 nm, 2,300 nm, 2,100 nm and 2,000 nm, respectively. Furthermore, as a result of measuring Raman spectra, IG/ID values showed 200 or more, respectively. Therefore, those single-walled carbon nanotubes are satisfied with the conditions of the present invention that the diameter is from 1.0 to 2.0 nm.

### Comparative Example 1

Experiment was conducted in the same manner as in Examples 1 and 2 except that toluene was used in place of decalin which is the first carbon source and is an organic solvent in the catalyst raw material liquid, used in Examples 1 and 2. However, a single-walled carbon nanotube was not obtained at all.

### Comparative Example 2

Experiments were conducted with three flow rates in the same manner as in Example 5 except that methane was used in place of ethylene which is the second carbon source used in Example 5. However, the diameter of the single-walled carbon nanotube obtained could not be controlled.

### Example 8

Experiment was conducted in the same manner as in Example 1 except that the catalyst was changed to iron ultrafine particles. The product thus obtained is used as Sample 8. As a result of estimating a diameter distribution of the single-walled carbon nanotube of the product as Sample 8 in the same manner as in Example 1, S1 peak was observed at 2,420 nm, similar to Sample 1. Furthermore, as a result of measuring a Raman spectrum, the IG/ID value showed 200 or more. This corresponds to a diameter of 2.0 nm.

The embodiment of Example 8 is satisfied with the conditions that the diameter is from 1.0 to 2.0 nm and IG/ID is 200 or more, and a carbon fiber aggregate comprising excellent single-walled carbon nanotube having a controlled diameter could be obtained.

Furthermore, as a result of observing with a transmission electron microscope in the same manner as in Example 4, it could be confirmed that an average diameter of single-walled carbon nanotubes is 2.0 nm.

From the above experimental results, in the production method of a carbon fiber aggregate comprising a single-walled carbon nanotube by a gas-phase flow CVD method of the present invention, use of a hydrocarbon as a carbon source, which thermally decomposes at lower temperature as a second carbon source is effective than an alkane organic solvent introduced as a carbon source into a reactor. Furthermore, it could be confirmed that the diameter of the single-walled carbon nanotube can be decreased by increasing flow rate of the second carbon source.

### Example 9

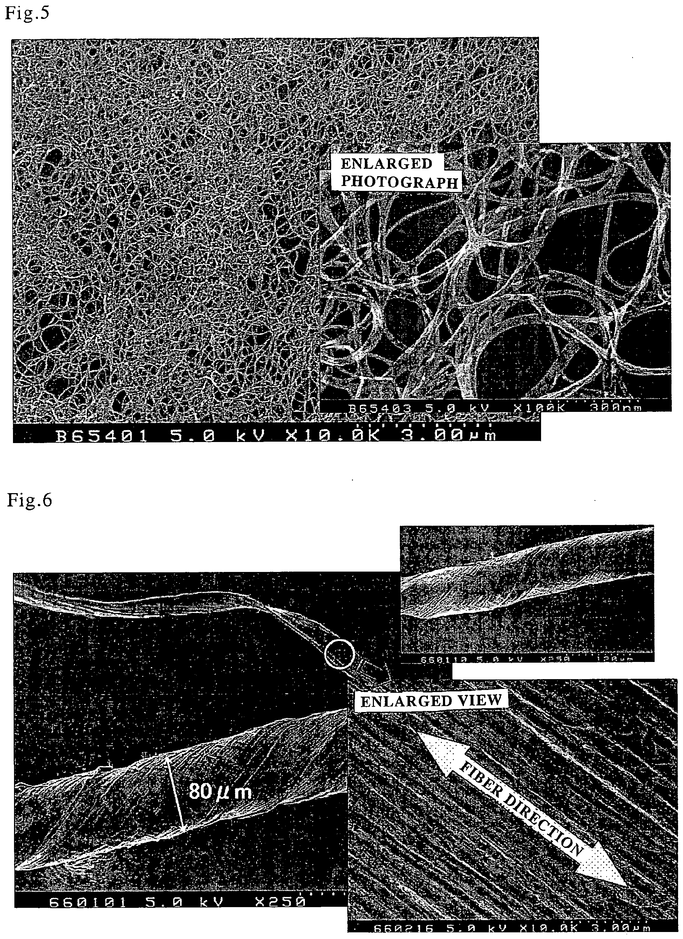

Sample 4 of a two-dimensional carbon fiber aggregate of the single-walled carbon nanotube produced in Example 4 was cut into a ribbon shape, and the surface thereof was observed with a scanning electron microscope (S-5000, manufactured by Hitachi Ltd.). The electron micrograph is shown in Fig. 5. According to the micrograph, it is seen that orientation of the single-walled carbon nanotubes is random in a two-dimensional plane of the ribbon, and the product by this synthesis method has extremely high purity and does not substantially contain impurities.

Furthermore, the ribbon-shaped carbon fiber aggregate was twisted to spin, impregnated with acetone, and dried to produce a carbon wire rod. A scanning electron micrograph of this carbon wire rod is shown in Fig. 6. It is seen that the single-walled carbon nanotubes are oriented in a direction that the rod wire was twisted in the course of spinning of the carbon wire rod.

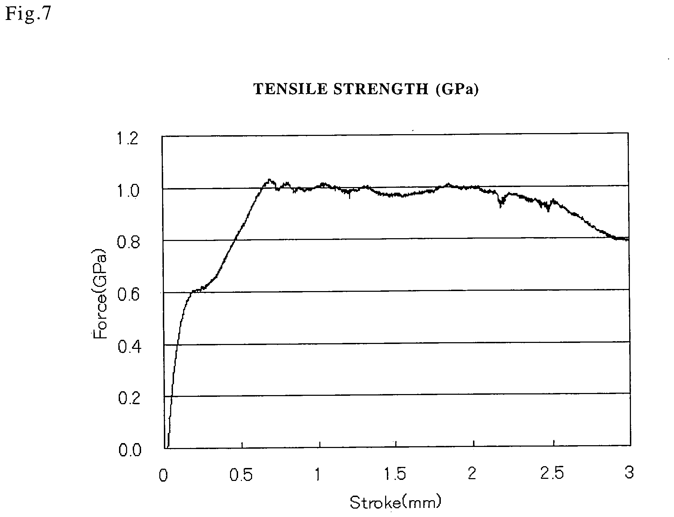

The result of a tensile strength test (Shimadzu Autograph AG-10kNIS, MS type, manufactured by Shimadzu Corporation) of the carbon wire rod (diameter: 80 µm) obtained by the above method is shown in Fig. 7. After applying stress up to 1 GPa by the tensile strength test, a joint between a testing machine and the carbon wire rod was slipped, and the carbon wire rod did not reach to break. Therefore, it was seen that tensile strength of the carbon wire rod obtained is at least 1 GPa.

## Claims

1. A method for producing a single-walled carbon nanotube, which comprises:
synthesizing a single-walled carbon nanotube by a gas-phase flow CVD method using at least a first carbon source and a second carbon source,
wherein the first carbon source comprises a saturated aliphatic hydrocarbon which is liquid at ordinary temperature, and the second carbon source comprises an unsaturated aliphatic hydrocarbon which is a gas at ordinary temperature,
wherein the saturated aliphatic hydrocarbon which is liquid at ordinary temperature is at least one selected from the group consisting of a non-cyclic saturated aliphatic hydrocarbon represented by the formula CₙH₂ₙ₊₂ (n = 6 to 17) and a cyclic aliphatic hydrocarbon selected from the group consisting of cyclohexane, decalin and tetradecahydrophenanthrene, and
wherein the unsaturated aliphatic hydrocarbon which is a gas at ordinary temperature is selected from the group consisting of ethylene, propylene and acetylene.

2. A method as claimed in claim 1, wherein the decalin is at least one selected from the group consisting of cis-decalin, trans-decalin and mixtures thereof.

## Patentansprüche

1. Verfahren zur Herstellung eines einwandigen Kohlenstoff-Nanoröhrchens, umfassend:
Synthetisieren eines einwandigen Kohlenstoff-Nanoröhrchens durch ein Gasphasenstrom-CVD-Verfahren unter Verwendung wenigstens einer ersten Kohlenstoffquelle und einer zweiten Kohlenstoffquelle,
wobei die erste Kohlenstoffquelle einen gesättigten aliphatischen Kohlenwasserstoff umfasst, der bei gewöhnlicher Temperatur flüssig ist und die zweite Kohlenstoffquelle einen ungesättigten aliphatischen Kohlenwasserstoff umfasst, der bei gewöhnlicher Temperatur ein Gas ist,
wobei der gesättigte aliphatische Kohlenwasserstoff, der bei gewöhnlicher Temperatur flüssig ist, wenigstens einer ist, der ausgewählt ist aus der Gruppe bestehend aus einem nichtzyklischen, gesättigten aliphatischen Kohlenwasserstoff, der durch die Formel CₙH₂ₙ₊₂ (n = 6 bis 17) repräsentiert ist und ein zyklischer aliphatischer Kohlenwasserstoff ist, der ausgewählt ist aus der Gruppe bestehend aus Cyclohexan, Decalin und Tetradecahydrophenanthren, und
wobei der ungesättigte aliphatische Kohlenwasserstoff, der bei gewöhnlicher Temperatur ein Gas ist, ausgewählt ist aus der Gruppe bestehend aus Ethylen, Propylen und Acetylen.

2. Verfahren nach Anspruch 1, wobei das Decalin wenigstens eines ist, das ausgewählt ist aus der Gruppe bestehend aus Cis-Decalin, Trans-Decalin und Mischungen davon.

## Revendications

1. Procédé de production d'un nanotube de carbone monoparoi, qui comprend :
la synthèse d'un nanotube de carbone monoparoi par un procédé CVD à écoulement en phase gazeuse en utilisant au moins une première source de carbone et une seconde source de carbone,
dans lequel la première source de carbone comprend un hydrocarbure aliphatique saturé qui est liquide à température ambiante, et la seconde source de carbone comprend un hydrocarbure aliphatique insaturé qui est un gaz à température ambiante,
dans lequel l'hydrocarbure aliphatique saturé qui est liquide à température ambiante est au moins un sélectionné dans le groupe constitué d'un hydrocarbure aliphatique saturé non cyclique représenté par la formule CₙH₂ₙ₊₂ (n = 6 à 17) et d'un hydrocarbure aliphatique cyclique sélectionné dans le groupe constitué du cyclohexane, de la décaline et du tétradécahydrophénanthrène, et
dans lequel l'hydrocarbure aliphatique insaturé qui est un gaz à température ambiante est sélectionné dans le groupe constitué de l'éthylène, du propylène et de l'acétylène.

2. Procédé selon la revendication 1, dans lequel la décaline est au moins une sélectionnée dans le groupe constitué de la cis-décaline, de la trans-décaline et des mélanges de celles-ci.
